# EUROPÄISCHE PATENTSCHRIFT

(11) **EP 1 820 251 B1**
(45) Veröffentlichungstag und Bekanntmachung des Hinweises auf die Patenterteilung: **08.05.2013**
(21) Anmeldenummer: 05792060.5
(22) Anmeldetag: 05.10.2005
(51) Int. Cl.: H02K 7/102, H02K 7/10

(54) **SPERRVORRICHTUNG, SOWIE GETRIEBE-ANTRIEBSEINHEIT BEINHALTEND EINE SOLCHE SPERRVORRICHTUNG, SOWIE VERFAHREN ZUM HERSTELLEN EINER SOLCHEN GETRIEBE-ANTRIEBSEINHEIT**
LOCKING DEVICE, GEARED DRIVING UNIT COMPRISING SUCH A LOCKING DEVICE, AND METHOD FOR MAKING SUCH A GEARED DRIVING UNIT
DISPOSITIF DE VERROUILLAGE, UNITE D'ENTRAINEMENT A ENGRENAGE COMPRENANT UN DISPOSITIF DE VERROUILLAGE DE CE TYPE, ET PROCEDE POUR REALISER UNE UNITE D'ENTRAINEMENT A ENGRENAGE DE CE TYPE

(30) Priorität: 01.12.2004 DE 102004058096
(43) Veröffentlichungstag der Anmeldung: 22.08.2007
(73) Patentinhaber: ROBERT BOSCH GMBH, 70442 Stuttgart (DE)
(72) Erfinder: TARHAN, Recep, 77830 Buehlertal (DE); MEYER, Christian, 76228 Karlsruhe-Wolfartsweier (DE); RETTMAR, Ulrich, 77830 Buehlertal (DE); WALTER, Gerd, F-67410 Rohrwiller (FR); DEMONT, Stefan, 77815 Buehl (DE)
(86) Internationale Anmeldenummer: PCT/EP2005/055001
(87) Internationale Veröffentlichungsnummer: WO 2006/058803

(56) Entgegenhaltungen:
- EP-A- 0 957 565
- EP-A- 1 320 175
- DE-A1- 10 103 736
- DE-A1- 10 236 372
- US-A- 4 398 110

## Beschreibung

### Stand der Technik

Die Erfindung betrifft eine Sperrvorrichtung mit zwei verschiebbar zueinander angeordneten Sperrelementen, sowie eine Getriebe-Antriebseinheit beinhaltend eine solche Sperrvorrichtung und ein Verfahren zum Herstellen einer solchen Getriebe-Antriebseinheit nach der Gattung der unabhängigen Ansprüche.

Mit der EP 1 320 175 A2 ist eine Antriebs- und/oder Abbremsvorrichtung bekannt geworden, bei der eine Bremseinheit innerhalb eines Gehäuses angeordnet ist, das einen Elektromotor umschließt. Die Bremseinheit weist eine Bremsscheiben und einen Bremskörper auf, die elektromagnetisch reibschlüssig gegeneinander anpressbar sind. Dabei ist der Bremskörper drehfest und axial fixiert mit dem Gehäuse des Elektromotors verbunden, während die Bremsscheibe axial verschiebbar auf der drehbar gelagerten Ankerwelle des Elektromotors angeordnet ist.

Eine derart ausgestaltete Bremsvorrichtung hat den Nachteil, dass bei der Montage der Antriebseinheit viele Toleranzen ausgeglichen werden müssen, da beim Zusammenbau der Bremskörper direkt am Gehäuse und die Bremsscheibe auf der Ankerwelle vormontiert werden, und erst anschließend zusammengebaut und zueinander justiert werden. Außerdem ist der Reibschluss zwischen den beiden Bremsscheiben sehr anfällig gegenüber Verschleiß und äußeren Einflüssen wie Schmutz, Kohlestaub, Fett und Erschütterungen, weshalb in der EP 1 320 175 A1 das Gehäuse des Elektromotors auch wasser-, luft- und staubdicht abgeschlossen sein muss.

Mit der DE 10103716 A1 ist eine elektrisch lüftbare Federkraftbremse mit den Merkmalen des Oberbegriffs des Anspruchs 1 bekannt geworden, bei der ein Bremsrotor und eine Artkerscheibe in einem Gehäuse angeordnet sind, wobei die Ankerscheibe mittels eines Elektromagneten und Federelementen auf den Bremsmotor hin und weg bewegt werden kann. Dadurch wird ein Reibschluss des Bremsrotors mit der Ankerscheibe sowie einem Gehäuseanschlag erzeugt, der die Welle, die auf dem der Bremsrotor angeordnet ist, blockiert.

### Vorteile der Erfindung

Die erfindungsgemäße Gretriebe-Antriebseinheit, und die darin angeordnete Sperrvorrichtung gemäß Anspruch 1 sowie das Verfähren zur Herstellung einer solchen Getriebe-Anthriebscinheit gemäß Anspruch 12 haben den Vorteil, dass durch die Ausbildung der Sperrvorrichtung als eigenständiges, komplett montierbares Modul der Montageaufwand für eine solche Getriebe-Antriebseinheit deutlich reduziert wird. Dabei ist keine hohe Montagegenauigkeit des Mitnehmers auf der Welle gegenüber der Sperrvorrichttung und keine hohe Positionsgenauigkeit der Sperrvorrichtung im Gehäuse der Getriebe-Antriebseinheit erforderlich. Die axialen Toleranzen (Luftspalt) zwischen den Sperrelementen kann bei der separaten Herstellung und unabhängigen Funktionsprüfung der Sperrvorrichtung mit deutlich weniger Aufwand eingehalten werden. Durch die Ausbildung eines axialen Formschlusses zwischen den beiden Sperrelementen ist die Sperrvorrichtung viel unempfindlicher gegenüber Schmutz und Fett. Durch den minimalen Verschleiß, bzw. Abrieb der Sperrelemente erhöht sich die Lebensdauer und die Dauerbelastbarkeit der Sperrvorrichtung. Aufgrund der Ausbildung des axialen Formschlusses zwischen den beiden Sperrelementen, beispielsweise in Form einer axialen Verzahnung, eignet sich die Sperrvorrichtung auch für dem Einsatz, im Kraftfahrzeug, bei dem erhöhte Schwingungs- und Schüttelhelastungen auftreten. Im Gegensatz zu der Anordnung von Bremsscheiben, ist unserer Erfindung unempfindlich gegenüher einer Resonanzfrequenz des Feder-Masse-Systems, die durch die Schwingungen im Fahrzeug angeregt wird. Damit sich im Drehzustand die beiden, in dem Sperrengehäuse angeordneten, Sperrelemente axial nicht berühren, weist das Sperrengehäuse mindestens einen axialen Anschlag auf, au dem sich das drehbare erste Sperrelement axial abstützt.

Wird der Formschluss zwischen den Sperrelementen durch radial angeordnete Rillen mit darin eingreifenden Zähnen gebildet, kann das Drehmoment des Antriebes sehr wirkungsvoll und zuverlässig unter minimaler Beeinflussung der Umgebungsbedingungen blockiert werden. Durch den formschluss wird hierbei zuverlässig ein Schlupf und ein Abrieb zwischen den Sperrelementen auch in Gegenwart von Schwingungsanregung oder Feuchtigkeit oder Kohlestaub verhindert.

Zur Herstellung der separat montierbaren Sperrvorrichtung ist es besonders günstig, dass die beiden Sperrelemente mit dem Elektromagnet und dem Rückstellelement innerhalb eines Sperrengehäuses montiert sind, das dann wiederum einfach in das Gehäuse der Getriebe-Antriebseinheit montiert werden kann. Das Sperrengehäuse nimmt dabei die auf die Sperrvorrichtung einwirkenden Kräfte auf und leitete sie an der Gehäuse der Getriebe-Antriebseinheit ab. Gleichzeitig schützt das Sperrengehäuse, wenn es bspw. näherungsweise geschlossen ausgebildet ist, die Sperrelemente vor Schmutz.

Zur einfachen, toleranzunempfindlichen Montage der Sperrvorrichtung auf die Antriebswelle weist das erste Sperrelement an einem zentralen Durchbruch radiale Aussparungen auf, in die bei der Montage entsprechende radiale Fortsätze der Antriebswelle eingreifen. Hierdurch ist ein toleranzunempfindlicher Formschluss geschaffen, der das Antriebsmoment auf das erste Sperrelement überträgt und gleichzeitig ein Axialspiel zwischen Antriebswelle und Sperrvorrichtung zulässt. Besonders einfach wird der Formschluss mittels einer Außenverzahnung auf der Antriebswelle erzielt, die in eine entsprechende Innenverzahnung des ersten Sperrelements eingreift.

Vorteilhaft ist es, die Sperrvorrichtung derart zu betreiben, dass während des Betriebszustands der mindestens eine Elektromagnet aktiviert wird, so dass dieser das zweite Sperrelement axial vom ersten Sperrelement entgegen einer Rückstellkraft entfernt hält. Dadurch kann sich die Antriebswelle im bestromten Zustand des Elektromagneten ungestört drehen. Im deaktivierten Zustand des Elektromagneten (unbestromt) wird dann das zweite Sperrelement aufgrund der Anpresskraft des Rückstellelements gegen das erste Sperrelement gepresst, um die Drehbewegung im Sperrzustand zu blockieren.

Von Vorteil ist es, wenn das Sperrengehäuse eine Anlaufscheibe aufweist, an dessen beiden axialen Stirnflächen sich das drehbare erste Sperrelement mit axialen Fortsätzen abstützt. Die stegförmige ausgebildeten axiale Fortsätze weisen Gegenanschläge auf, die teilweise, oder vollständig tangential umlaufend ausgebildet sind. Dabei ist unter geringen Reibungsverlusten gewährleistet, dass das bewegliche Sperrelement im Drehzustand nicht axial in das zweite, mit dem Elektromagneten verbundenen Sperrelement greift.

Zur einfachen Montage sind die axialen Fortsätze bspw. als Rast- oder Klipshaken ausgebildet. Alternativ kann der Gegenanschlag nach dem Einführen der radialen Fortsätze durch die zentrale Aussparung der Anlaufscheibe mittels Sicherungselementen oder radialer Materialumformung gebildet werden.

Sind die elektrischen Kontakte des Elektromagneten als Federelemente ausgebildet, die sich axial an dessen Stirnseite erstrecken, wird die Montage vereinfacht, da dann ein blinder Fügevorgang angewendet werden kann. Die Federelemente werden im Elektromagneten befestigt und weisen eine für die Stromübertragung geeignete Kontaktoberfläche auf.

Besonders einfach kann das zweite, mit dem Elektromagneten verbundene Sperrelement axial geführt werden, indem dieses axiale Ausformungen aufweist, die in entsprechende Gegenausformungen eines Spulenträgers des Elektromagneten eingreifen. Dadurch sind keine zusätzlichen Bauteile notwendig, da die axialen Führungs-, bzw. Gegenführungselemente jeweils einstückig an das zweite Sperrelement, bzw. die Halterung des Elektromagneten angeformt werden kann.

Werden die Flächen der beiden Sperrelemente, die den Formschluss bilden zumindest teilweise aus einem elastischen Material, wie Kunststoff, insbesondere einem Elastomer ausgebildet, kann die Geräuschbildung bei einem Durchrutschen der beiden Sperrelemente gegeneinander in einem Notbetriebsfall deutlich reduziert werden.

Das erfindungsgemäße Verfahren zur Herstellung einer erfindungsgemäßen Getriebe-Antriebseinheit hat den Vorteil, dass aufgrund der separaten Ausbildung der Sperrvorrichtung mit den beiden Sperrelementen ohne hohe Toleranzanforderungen einfach in das Gehäuse und auf die Antriebswelle montiert werden kann. Dazu wird die Antriebswelle einerseits in dem als Loslager ausgebildeten Wälzlager aufgenommen, und andererseits ein Formschluss mit dem ersten Sperrelement zur Drehmomentübertragung hergestellt.

Die Montage der Sperrvorrichtung in das Gehäuse der Antriebseinheit erfolgt besonders günstig durch Einpressen und anschließender Axialsicherung mittels Materialumformung. Die axiale Positionierung der Sperrvorrichtung ist dabei unkritisch, da der Abstand der beiden Sperrelemente durch die Anschläge des Sperrengchäuse, bzw. der Antriebswelle justiert werden.

Durch die komplette Vormontage der Sperrvorrichtung mit den heidem Sperrelementen, den Elektromagneten und dem mindestens einen Rückstellelement kann diese als separate Baueinheit ausgebildete Sperrvorrichtung von einem Lieferanten unabhängig gefertigt und auf deren Funktion und Leistungsaufnahme überprüft werden. Dadurch wird die Montage und die Funktionsprüfung der Getriebe-Antriebseinheit wesentlich vereinfächt.

### Zeichnungen

In den Zeichnungen sind veschiedene Ausführungsbeispiele einer erfindungsgemäßen Sperrvorrichtung sowie einer Getriebe-Antriebseinheit dargestellt und in der nachfolgenden Beschreibung näher erläutert. Es zeigen
Figur 1 einen Schnitt durch eine erfindungsgemäße in eine Getriebe-Antriebseinheit eingebaute Sperrvorrichtung,
Figur 2 eine axiale Ansicht der Sperrvorrichtung aus Figur 1,
Figur 3 einen Schnitt durch die Sperrvorrichtung aus Figur 2 gemäß III-III
Figur 4 als technologischer Hintergrund einen Schnitt durch ein Biespiel, das nicht zur Erfindung gehört, im eingebauten Zustand und
Figur 5 als technologischer II intergrund eine weitere Variation des Beispiels gemäß Figur 4.

### Beschreibung der Ausführungsbeispiele

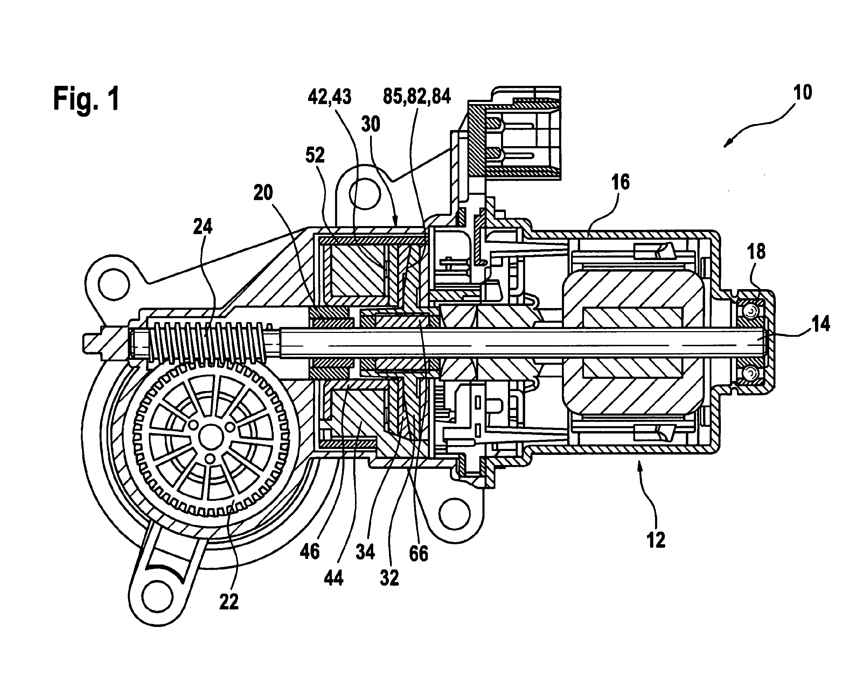

In Figur 1 ist eine Getriebe-Antricbeinheit 10 dargestellt, bei der ein Elektromotor 12 mit einer Antriebswelle 1 4 innerhalb eines Gehäuses 16 der Getriebe-Antriebseinheit 10 angeordnet ist. Die Antriebswelle 14 ist mittels eines Wälzlagers 18 und/oder eines Gleitlagers 20 gelagert und weist eine Schnecke 24 auf, die bspw. über ein Schneckenrad 22 mit einem nicht dargestellten Stellglied eines beweglichen Teils im Kraftfahrzeug zusammenwirkt. Um die Antriebswelle 14 gegenüber dem Gehäuse 16 zu blockieren, ist im Gehäuse 16 eine Sperrvorrichtung 30 angeordnet, die ein erstes Sperrelement 32 und ein zweites Sperrelement 34 aufweist. Das erste Sperrelement 32 greift formschlüssig in einen Mitnehmer 66, der drehfest auf der Ankerwelle 14 angeordnet ist. Das zweite Sperrelement 34 hingegen ist drehfest mit dem Gehäuse 16 verbunden. Im Sperrzustand (wie in Fig. 1 darstellt) greift das erste Sperrelement 32 formschlüssig in das zweite Sperrelement 34, wodurch eine Drehung der Antriebswelle 14 verhindert wird. Hierzu weisen die beiden Sperrelemente 32, 34 radial verlaufende Rillen 82 und Erhöhungen 84 auf, die entsprechend einer axialen Verzahnung 85 mittels mindestens einem federnden Rückstellelement 42 ineinander gepresst werden. Im Ausführungsbeispiel sind die formschlüssig ineinander greifende Flächen der Sperrelemente 32, 34 unter einem Winkel von kleiner, bzw. größer als 90° gegenüber der Welle 14 angeordnet. Das zweite Sperrelement 34 ist mit einem Elektromagneten 44 wirkverbunden, der in bestromten Zustand des zweite Sperrelement 34 entgegen der Federkraft des Rückstellelement 42 axial vom ersten Sperrelement 32 wegzieht, derart, dass sich der axiale Formschluss 85 löst und sich die beiden Sperrelemente 32 und 34 berührungslos gegeneinander verdrehen lassen. Der Elektromagnet 44 ist in einem Spulenträger 46 gelagert, der einerseits drehfest mit dem Gehäuse 16 verbunden ist und andererseits axiale Führungselemente 78 aufweist, die mit entsprechenden axialen Gegenführungen 80 des zweiten Sperrelements 34 zusammenwirken. Dadurch ist gewährleistet, dass beim Anlegen eines Stroms an den Elektromagneten 44 sich die Sperrvorrichtung 30 im Drehzustand befindet, wohingegen der stromlose Zustand dem Sperrzustand entspricht. Erfindungsgemäß bildet die Sperrvorrichtung 30 eine separate vormontierte Baueinheit 31, die zumindest die beiden Sperrelement 32, 34 und den Elektromagneten 44 umfasst. In Figur 1 sind diese in einem Sperrengehäuse 52 der Sperrvorrichtung 30 angeordnet, wobei das Sperrengehäuse 52 axial in das Gehäuse 16 eingepresst und gegen ein Verschieben gesichert ist.

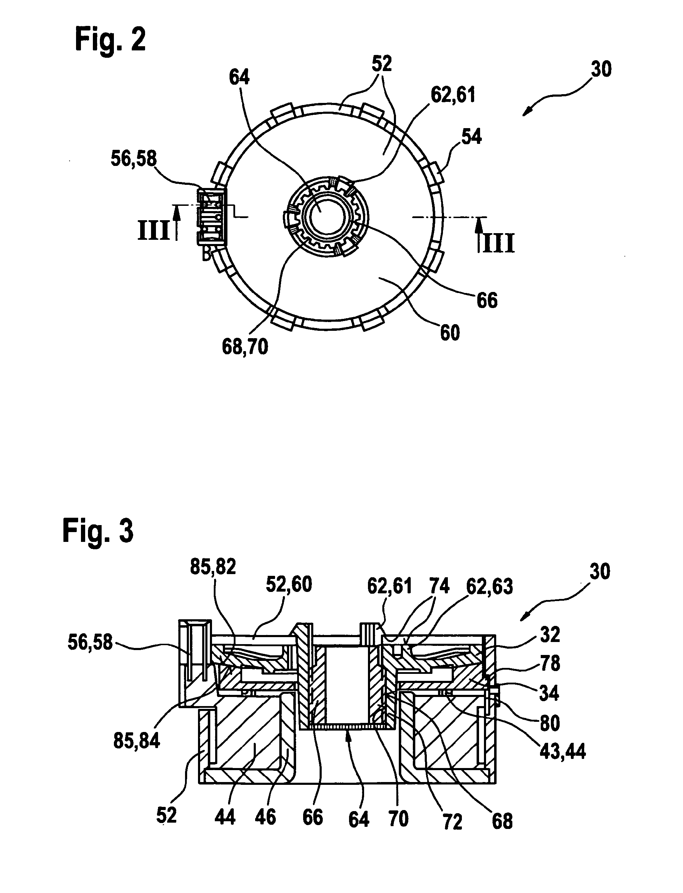

Figur 2 zeigt eine Ansicht der separat ausgebildeten Sperrvorrichtung 30 in Axialrichtung vor dem Einbau in die Getriebe-Antriebseinheit 10. Die beiden Sperrelemente 32 und 34, sowie der Elektromagnet 44 sind in dem Sperrengehäuse 52 angeordnet. Das Sperrengehäuse 52 ist zylinderförmig ausgebildet und weist an seinem Umfang radiale Rastelemente 54 auf, die sich beim Einbau in das Gehäuse 16 an diesem festkrallen. Am Umfang des Sperrengehäuses 52 ist als elektrische Kontaktierung 56 des Elektromagneten 44 ein Steckerelement 58 angeordnet, das unabhängig vom Motorstrom des Elektromotors 12 bestromt werden kann. Die Stirnseite des Sperrengehäuses 52 ist als Anlaufscheibe 60 ausgebildet, an der sich das erste Sperrelement 32 über axiale Fortsätze 62 axial abstützt. Das erste Sperrelement 32 ist als Scheibe mit einer zentralen Öffnung 64 ausgebildet, die formschlüssig in einen Mitnehmer 66 eingreift. Der Formschluss wird im Ausführungsbeispiel durch eine Innenverzahnung 68 des ersten Sperrelemente 32 gebildet, die axial auf eine Außenverzahnung 70 des Mitnehmers 66 aufgeschoben wird. Bei der Montage der Getriebe-Antriebseinheit 10 wird hierbei der Mitnehmer 66 zuerst drehfest auf die Antriebswelle 14 befestigt, und anschließend die Antriebswelle 14 mit dem Mitnehmer 66 axial in die Öffnung 64 der Sperrvorrichtung 30 eingeschoben. Da das erste Sperrelement 32 innerhalb des Sperrengehäuses 52 axial abgestützt wird, ist die axiale Positionierung der Antriebswelle zur Sperrvorrichtung 30 toleranzunempfindlich.

Figur 3 zeigt einen Schnitt gemäß III-III der Sperrvorrichtung 30 in Figur 2, wobei zur Veranschaulichung der Mitnehmer 66 ohne Antriebswelle 14 im formschlüssigen Eingriff mit dem ersten Sperrelement 32 dargestellt ist. Das erste Sperrelement 32 weist an seiner zentralen Öffnung 64 eine Hülse 72 auf, an der die Innenverzahnung 68 angeformt ist. Zur axialen Abstützung gegenüber der Innenwand der Anlaufscheibe 60 weist das Sperrelement 32 als axiale Fortsätze 62 einen umlaufenden Steg 63 auf, der sich an dem drehfesten Anschlag 74, der durch die Innenwand der Anlaufscheibe 60 gebildet wird, abstützt. Zur Abstützung bezüglich des Elektromagneten 44 weist das erste Sperrelement 32 weitere axiale Fortsätze 62 auf, die als Rasthaken 61 ausgebildet sind und durch die zentrale Öffnung 64 der Anlaufscheibe 60 hindurch, an der - einen weiteren Anschlag 74 bildenden - Außenwand der Anlaufscheibe 60 anliegen. Die Rasthaken 61 sind gegenüber der Hülse 72 freigespart, damit sie flexibel durch die Öffnung 64 eingeschoben werden können und anschließend sicher einrasten. Auf diese Weise ist das erste Sperrelement 32 auf einfache Weise zuverlässig gegen eine axiale Verschiebung innerhalb des Sperrengehäuses 52 gesichert. In einer alternativen nicht dargestellten Ausführung stützten sich die axialen Fortätze 62 mittels Materialumformung an der Außenseite der Anlaufscheibe 60 ab oder die axialen Fortsätze 62 sind als Dom ausgebildet, der sich mittels eines Klemmrings an der Anlaufscheibe 60 abstützt.

Der Elektromagnet 44 ist auf dem Spulenträger 46 angeordnet, der gleichzeitig ein Teil des Sperrengehäuses 52 bildet. Das zweite Sperrelement 34 ist über axiale Führungselemente 78 drehfest im Sperrengehäuse 52 angeordnet, wobei die Führungselemente 78 mit entsprechenden Gegenelementen 80 des Sperrengehäuses 52 zusammenwirken. Im Sperrzustand wird das als Scheibe ausgebildete zweite Sperrelement 34 durch das Rückstellelement 42 formschlüssig gegen das erste Sperrelement 32 gedrückt. Wird der Elektromagnet 44 bestromt, wird das Sperrelement 34 durch die magnetische Kraft in Figur 3 nach unten gezogen, wodurch sich der Formschluss 85 des Sperrzustand löst und sich das erste Sperrelement 32 reibungslos gegenüber dem zweiten Sperrelement 34 drehen kann. Das Rückstellelement 42 sind bspw. als mehrere Federelemente 43 oder als ein die zentrale Öffnung 64 umschließendes einförmiges Federelement 43 ausgebildet. Zur Ausbildung eines axialen Formschlusses 85 im Sperrzustand weisen die Sperrelemente 32 und 34 jeweils radial verlaufende Vertiefungen 82 und Erhöhungen 84 auf, die bspw. als axiale Verzahnung 85 ausgebildet sind.

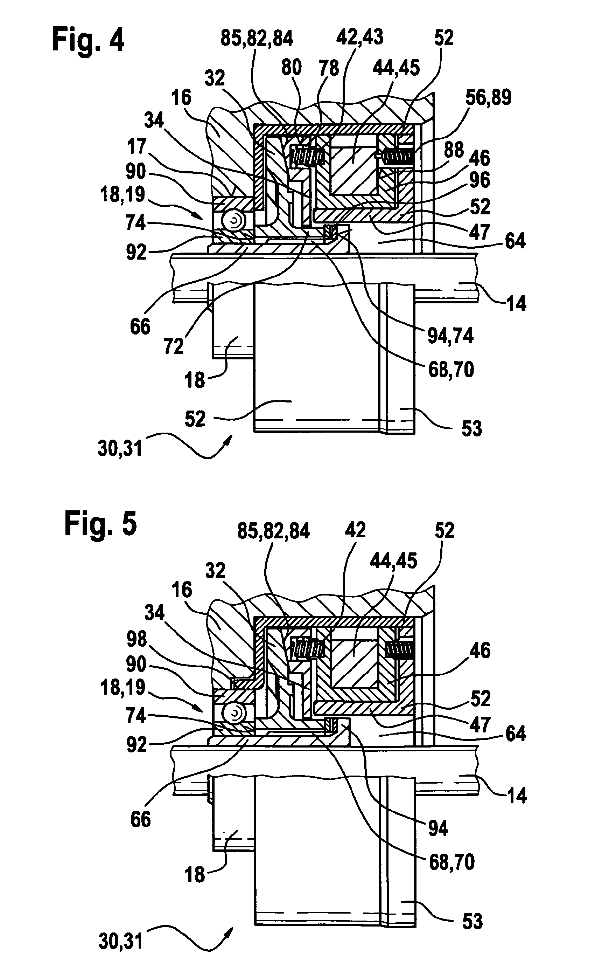

In Figur 4 ist ein Beispiel einer Sperrvorrichtung 30 im in das Gehäuse 16 eingebauten Zustand dargestellt, das nicht zur Erfindung gehört. Innerhalb des Sperrengehäuses 52 ist wieder der Elektromagnet 44, das drehfest mit dem Gehäuse 16 verbundene zweite Sperrelement 34 und das mittels der Antriebswelle 14 drehbare erste Sperrelement 32 angeordnet und bilden zusammen die separat ausgebildete Baueinheit 31, die als eine Baugruppe in einem einzigen Montageschritt ins Gehäuse 16 eingefügt wird. Im dargestellten Sperrzustand greifen das erste und das zweite Sperrelement 32 und 34 axial ineinander, wobei als Rückstellelement 42 zum Anpressen des zweiten Sperrelements 34 einzelne Federelemente 43 in entsprechende Aufnahmen des Spulenträgers 46 angeordnet sind. Die Aufnahmen sind gleichzeitig als axiale Führungselemente 78 ausgebildet, die in entsprechende Gegenelemente 80 des Sperrelements 34 greifen. Dadurch kann das Drehmoment im Sperrzustand vom ersten Sperrelement 32 auf das zweite Sperrelement 34 über den Spulenträger 46 und das Sperrengehäuse 52 auf das Gehäuse 16 der Getriebe-Antriebseinheit 10 abgeleitet werden. Zur Bestromung des Elektromagneten 44 sind von einer Stirnseite 88 des Elektromagneten 44 elektrisch leitende Federelemente 89 als elektrische Kontaktierung 56 angeordnet, die sich in axialer Richtung erstrecken.

Bei diesem Beispiel ist in dem Gehäuse 16 ein Wälzlager 18 als Loslager ausgebildet, das mit einem Außenring 90 drehfest mit dem Gehäuse 16 verbunden ist und mit einem Innenring 92 die Antriebswelle 14 aufnimmt. Das Gehäuse 16 ist bspw. aus Aluminium gespritzt. Das Wälzlager 18, das als Kugellager 19 ausgebildet ist, wird hierbei in eine Lageraufnahme 17 eingesetzt und durch das federnd am Außenring 90 anliegende Sperrgehäuse 52 zusammen mit diesem axial gesichert, bspw. mittels Verstemmen oder Einpressen. Bei der Montage der Getriebe-Antriebseinheit 10 wird die Baueinheit 31 der Sperrvorrichtung 30 derart an das Wälzlager 18 angeordnet, dass das sich erste Sperrelement 32 axial an einen Anschlag 74 abstützt, der durch den Innenring 92 gebildet wird. Anschließend wird die Antriebswelle 14 mit dem Mitnehmer 66 durch die zentrale Öffnung 64 des Sperrvorrichtung 30 und in den Innenring 92 eingeführt, bis sich das erste Sperrelement 32 an einem weiteren Anschlag 74 der Antriebswelle 14 axial abstützt. Dieser zweite Anschlag 74 ist im Beispiel als umlaufender Bund 94 des Mitnehmers 66 ausgebildet. Zwischen dem Bund 94 und dem ersten Sperrelement 32 ist eine Axialfeder 96 angeordnet, um eine axiale Verschiebung der Antriebswelle 14 auszugleichen. Aufgrund der Vorspannung der Axialfeder 96 muss die Positionierung der Ankerwelle 14 gegenüber der Sperrvorrichtung 30 nicht sehr genau erfolgen, was die Montage der Getriebe-Antriebseinheit 10 deutlich vereinfacht. Bei dieser Ausbildung der Sperrvorrichtung 30 als separate Baugruppe 31 ist die zuverlässige axiale Fixierung des drehbaren Sperrelements 32 dadurch ebenfalls bei minimalem Montageaufwand gesichert. Bei dieser Anordnung ist die Antriebswelle 14 mindestens mit einem weiteren, nicht dargestellten Festlager gelagert, wobei das Axialspiel - verursacht durch thermische Ausdehnung oder Materialverschleiß oder Montagetoleranzen - mittels der elastischen axialen Lagerung des ersten Sperrelements 32 ausgeglichen wird. Die Kraftübertragung von der Antriebswelle 14 auf das erste Steuerelement 32 erfolgt wiederum über einen Formschluss zwischen dem Mitnehmer 66 und der Sperrscheibe 32, wobei an diesen keine hohen Präzisionsanforderungen gestellt werden. Für den Einbau des Sperrengehäuses 52 weist diese einen Bund 53 mit größerem Durchmesser auf, der eine Presspassung mit dem Gehäuse 16 bildet.

Figur 5 zeigt eine Variation des Beispiels gemäß Figur 4, bei dem das Wälzlager 18 als Teil der Sperrvorrichtung 30 an dem Sperrengehäuse 52 angeformt ist. Das Sperrengehäuse 52 weist hierzu eine Aufnahme 98 auf, in die der Außenring 90 des Wälzlagers 18 eingepresst oder in anderer bekannter Weise drehfest befestigt es. Dadurch ist das Wälzlager 18 Bestandteil der Baugruppe 31 und kann in einem Montageschritt mit der Sperrvorrichtung 30 in das Gehäuse 16 eingefügt werden. Dabei bildet wiederum der Innenring 92 einen radialen Anschlag 74 für das erste Sperrelement 32, die beide im Drehbetrieb gemeinsam mit der Antriebswelle 14 umlaufen. Bei der Montage der Ankerwelle 14 wird der Mitnehmer 66 zuerst durch die zentrale Öffnung 64 des Steuerelements 32 und anschließend durch den Innenring 92 geschoben. Dabei bildet der Mitnehmer 66 mit dem Innenring 92 eine Spielpassung und mit der Sperrscheibe 32 einen Formschluss, bspw. eine Verzahnung 68, 70. Die Sperrelemente 32 und 34 haben bspw. im Drehzustand einen Abstand zwischen den Verzahnungen 82, 84 von etwa 0,4 mm, bzw. einen Abstand zwischen dem drehfesten Steuerelement 34 und dem Spulenträger 46 von ca. 1 mm. Die Toleranzen in diesern Maße können bei dieser als separate, Baugruppe 31 ausgebildete Sperrvorrichtung 30 mittels einer vorherigen Furktionsprüfung kontrolliert werden, indem bspw. der Leistungsbedarf im Drehzustand gemessen wird. Der Electromagnet 44 bestcht im Beispiel aus einer Spule 45, die auf dem Spulenträger 46 aufgewickelt ist. Der Spalenträger 46 ist auf einem Joch 47 angeordnet, an dem das zweite drehfesten Sperrelement 34 im Drebzustand, bei bestromten Magneten 44, anliegt. Im Sperrzustand, wenn das Steuerelement 34 durch das Rückstellelement 42 formschlüssig gegen das Sperrelement 32 gepresst wird, entsteht zwischen dem Sperrelement 34 und dem Joch 47 ein Spalt von etwa 1 mm. Der Formschluss 85 zwischen den beiden Sperrelementen 32, 34 ist als Plan- oder Schrägverzahnung 85 ausgebildet und weist bspw. etwa 40 Rastpositionen auf.

Die oben beschricbenen Beispiele gemäß dem technologischen Hintergrund der Erfindung können wie folgt wiedergegeben werden:
Getriebe-Antriebseinheit (10), mit einer Sperrvorrichtung (30), wobei an der Sperrvorrichtung (30) ein Wälzlager (18) mit einem Außenring (90) und einem Innenring (92) angeordnet ist, wobei sich der Außenring (90) am Gehäuse (16) abstützt und der Innenring (92) die Welle (14) insbesondere mit einem darauf drehfest angeordneten Mitnehmer (66) - aufnimmt.

Getriebe-Antriebseinheit (10) wobei das Wälzlager (18) als Teil der Sperrvorrichtung (30) test in das Sperrengchäuse (52) integriert ist.

Getriebe-Antriebseinheit (10) wobei sich das erste, drehbare Sperrelement (32) axial am binenring (92) des Wälzlagers (18) abstützt.

Ciretriebe-Attriebseinheit (10) wobei sich das erste, drehbare Sperrelement (30) axial au der Welle (14) - insbesondere an einem Bund (94) des Mitnehmers (66) abstützt. Getriehe-Antriebseinheit (10) wobei sich das erste, drehbare Sperrelement (32) axial elastisch am Innenring (92) /und oder der Welle (14) -- beispielsweise mittels einer Axialfeder (96) - abstützt, um ein Längspiel der axial lose im Wälzlager (18) gelagerten Welle (14) auszugleichen.

Es sei angemerkt, dass hinsichtlich der in den Figuren und der Beschreihung gezeigten Ausführungsbeispiele vielfältige Kombinationsmliglichkeiten der einzelnen Merkmale untereinander möglich sind. So kann bspw. die konkrete Ausgestaltung des Formschlusses 85 zwischen dem ersten und zweiter Sperrelement 32, 34, sowie zwischen dem Mitnehmer 66 und dem Sperrelemont 32 beliebig variiert und den Anforderungen, insbesondere bzgl. Schwingimgs- und Küttelbelastung, angepasst werden. Ebenso kann die Drehsicherung des zweiten Sperrelements 34 sowie dessen magnetische Ausrück- und Rückstellvorrichtung 42, 43 beliebig ausgestallet sein (mehrere einzelne Magnete 44). Die axiale Fixierung des drehbaren Sperrelements 32 innerhalb des Sperrengehäuses 52 kann ebenso über verschiedenartig ausgeformte Anschläge des Sperrengchäusecs 52 gewäshrleistet werden. Bevorzugt wird die erfindungsgemäße Getriebe-Antriebseinheit 10 zur Betätigung eines Differentialgetriebes eines Fahzeugs verwendet, das bspw. einer Rüttelbelastung von 20 g ausgesetzt ist. Die erfindungsgemäße Sperrvorrichtung 30 kann jedoch auch für anderen Elektromotoren 12, wie z.B. Stellantriche, eingesetzt werden, die einer hohen Temperatur- und Sehwingungsbelastung ausgesetzt sind.

## Patentansprüche

1. Sperrvorrichtung (30) zum Sperren einer Drehbewegung einer Welle (14) gegenüber einem Gehäuse (16) einer Getriebe-Antriebseinheit (10), mit einem ersten Sperrelement (32) und einem zweiten Sperrelement (34), das mittels mindestens einem Elektromagneten (44) und mindestens einem Rückstellelement (42) verschiebbar gegenüber dem ersten Sperrelement (32) ist, wobei die Sperrvorrichtung (30) als separate, eigenständige Baueinheit (31) ausgebildet ist, die als eine Einheit (31) einerseits an das Gehäuse (16) und andererseits auf die Welle (14) montierbar ist, wobei die beiden Sperrelemente (32, 34) mit dem Elektromagneten (44) und dem Rückstellelement (42) innerhalb eines Sperrengehäuses (52) angeordnet sind,
**dadurch gekennzeichnet, dass** das Sperrengehäuse (52) mindestens einen axialen Anschlag (60, 74) aufweist, an dem sich das drehbare erste Sperrelement (32) axial abstützt, damit sich im Drehzustand die beiden, in dem Sperrengehäuse (52) angeordneten, Sperrelemente (32, 34) axial nicht berühren, wobei das erste, drehbare Sperrelement (32) axiale Fortsätze (62, 61) aufweist, die sich an dem mindestens einen axialen Anschlag (60, 74) des Sperrengehäuses (52) abstützen, und die Sperrelemente (32, 34) Im Sperrzustand in Axialrichtung formschlüssig ineinander greifen.

2. Sperrvorrichtung (30) nach Anspruch 1, **dadurch gekennzeichnet, dass** die beiden Sperrelemente (32, 34) jeweils radial verlaufende Vertiefungen (82) und radial verlaufende Erhöhungen (84) aufweisen, die formschlüsslg ineinander greifen können, um die Drehbewegung der Welle (14) zu Sperren.

3. Sperrvorrichtung (30) nach einem der Ansprüche 1 oder 2, **dadurch gekennzeichnet, dass** das Sperrengehäuse (52) näherungsweise geschlossenen ausgebildet ist, und in das Gehäuse (16) der Getriebe-Antriebseinheit (10) einfügbar ist.

4. Sperrvorrichtung (30) nach einem der vorhergehenden Ansprüche, **dadurch gekennzeichnet, dass** das erste Sperrelement (32) als drehbare Scheibe mit radialen Ausformungen (68) - beispielsweise einer Innenverzahnung (68) - ausgebildet ist, die in entsprechende Gegenausformungen (70) - beispielsweise eine Aüßenverzahnung (70) - eines drehfest auf der Welle (14) angeordneten Mitnehmers (66) eingreifbar sind, der nach der Montage des Sperrelements (32) in dieses eingeschoben wird.

5. Sperrvorrichtung (30) nach einem der vorhergehenden Ansprüche, **dadurch gekennzeichnet, dass** der Elektromagnet (44) im Sperrzustand nicht bestromt ist, und das zweite Sperrelement (34) durch das mindestens eine Rückstellelement (42) formschlüssig in das erste Sperrelement (32) gepresst wird, und im Drehzustand der Elektromagnet (44) bestromt ist, um das zweite Sperrelements (34) axial aus dem ersten Sperrelement (32) zu lösen.

6. Sperrvorrichtung (30) nach einem der vorhergehenden Ansprüche, **dadurch gekennzeichnet, dass** der mindestens eine axiale Anschlag (74) durch die Außenwand einer Anlaufscheibe (60) ausgebildet ist.

7. Sperrvorrichtung (30) nach einem der vorhergehenden Ansprüche, **dadurch gekennzeichnet, dass** zur axialen Abstützung gegenüber der Innenwand der Anlaufscheibe (60) das Sperrelement (32) als an dere axiale Fortsätze (62) einen umlaufenden Steg (63) aufweist, der sich an einem drehfesten Anschlag abstützt, der durch die Innenwand der Anlaufscheibe (60) gebildet wird.

8. Sperrvorrichtung (30) nach einem der vorhergehenden Ansprüche, **dadurch gekennzeichnet, dass** die Fortsätze (62, 61, 63) einen Rasthaken (61) oder einen Dom mit einem Klemm- oder Sicherungsring bilden, oder nach dem Durchschieben durch die Anlaufscheibe (60) radial umgeformt werden - und sich insbesondere mittels Materialumformung an der Außenseite der Anlaufscheibe (60) abstützen.

9. Sperrvorrichturig (30) nach einem der vorhergehenden Ansprüche, **dadurch gekennzeichnet, dass** an einer Stirnseite (88) des Elektromagneten (44) als elektrische Kontaktierung (56) Federelemente (89) angeordnet sind, die sich in axialer Richtung erstrecken.

10. Sperrvorrichtung (30) nach einem der vorhergehenden Ansprüche, **dadurch gekennzeichnet, dass** der Elektromagnet (44) in einem Spulenträger (46) angeordnet ist, an dem zur axialen Führung und/oder zur Drehsicherung des zweiten Sperrelements (34) axiale Führungselemente (78) - insbesondere Zapfen (78) - angeformt sind, die in entsprechende Gegenelemente (80) des zweiten Sperrelements (34) greifen.

11. Sperrvorrichtung (30) nach einem der vorhergehenden Ansprüche, **dadurch gekennzeichnet, dass** zumindest eines der beiden Sperrelemente (32, 34) insbesondere das zweite Sperrelement (34) - zumindest teilweise aus Kunststoff, beispielsweise einem Elastomer gefertigt ist.

12. Verfahren zum Herstellen einer Getriebe-Antriebseinheit (10) mit einer Sperrvorrichtung (30) nach einem der vorhergehenden Ansprüche, **dadurch gekennzeichnet, dass** die Sperrvorrichtung (30) zuerst im Gehäuse (16) der Getriebe-Antriebseinheit (10) befestigt wird, und anschließend die Welle (14) - insbesondere mit dem Mitnehmer (66) - mit einem spielbehafteten Formschluss in eine zentrale Aussparung (64) des ersten Sperrelements (32) eingeführt wird.

13. Verfahren nach Anspruch 12, **dadurch gekennzeichnet, dass** die Sperrvorrichtung (30) mit dem Sperrengehäuse (52) in das Gehäuse (16) der Getriebe-Antriebseinheit (10) drehfest eingebaut und insbesondere mittels Materialumformung axial gesichert wird.

14. Verfahren nach Anspruch 12 oder 13 **dadurch gekennzeichnet, dass** die Sperrvorrichtung (30) vor dem Einbau in das Gehäuse (16) und vor der Montage der Welle (14) als separate, von dem Sperrengehäuse (52) umschlossene Einheit (31) auf ihre Funktion, insbesondere auf deren Leistungsaufnahme, überprüft wird.

## Claims

1. Locking apparatus (30) for locking a rotational movement of a shaft (14) with respect to a housing (16) of a gearbox/drive unit (10), having a first locking element (32) and a second locking element (34) which can be displaced with respect to the first locking element (32) by means of at least one electromagnet (44) and at least one restoring element (42), the locking apparatus (30) being configured as a separate, independent structural unit (31) which can be mounted as a unit (31) firstly onto the housing (16) and secondly onto the shaft (14), the two locking elements (32, 34) being arranged with the electromagnet (44) and the restoring element (42) inside a lock housing (52), **characterized in that** the lock housing (52) has at least one axial stop (60, 74), on which the rotatable first locking element (32) is supported axially, in order that the two locking elements (32, 34) which are arranged in the lock housing (52) do not make contact with one another axially in the rotating state, the first, rotatable locking element (32) having axial projections (62, 61) which are supported on the at least one axial stop (60, 74) of the lock housing (52), and the locking elements (32, 34) engaging positively into one another in the axial direction in the locked state.

2. Locking apparatus (30) according to Claim 1, **characterized in that** the two locking elements (32, 34) in each case have radially extending depressions (82) and radially extending elevations (84) which can engage positively into one another, in order to lock the rotational movement of the shaft (14).

3. Locking apparatus (30) according to either of Claims 1 and 2, **characterized in that** the lock housing (52) is of approximately closed configuration and can be inserted into the housing (16) of the gearbox/drive unit (10).

4. Locking apparatus (30) according to one of the preceding claims, **characterized in that** the first locking element (32) is configured as a rotatable disc with radial shaped-out mouldings (68), for example an internal toothing system (68), which can engage into corresponding mating shaped-out mouldings (70), for example an external toothing system (70), of a driver (66) which is arranged fixedly on the shaft (14) so as to rotate with it and is pushed into the locking element (32) after the mounting of the latter.

5. Locking apparatus (30) according to one of the preceding claims, **characterized in that** the electromagnet (44) does not have current applied to it in the locked state, and the second locking element (34) is pressed positively into the first locking element (32) by the at least one restoring element (42), and the electromagnet (44) has current applied to it in the rotating state, in order to release the second locking element (34) axially from the first locking element (32).

6. Locking apparatus (30) according to one of the preceding claims, **characterized in that** the at least one axial stop (74) is formed by the outer wall of a thrust plate (60).

7. Locking apparatus (30) according to one of the preceding claims, **characterized in that**, for axial support with respect to the inner wall of the thrust plate (60), the locking element (32) has, as other axial projections (62), a circumferential web (63) which is supported on a rotationally fixed stop which is formed by the inner wall of the thrust plate (60).

8. Locking apparatus (30) according to one of the preceding claims, **characterized in that** the projections (62, 61, 63) form a latching hook (61) or a mandrel with a clamping or securing ring, or are radially deformed after being pushed through by the thrust plate (60), and are supported on the outer side of the thrust plate (60), in particular, by material deformation.

9. Locking apparatus (30) according to one of the preceding claims, **characterized in that** spring elements (89) which extend in the axial direction are arranged as electric contact (56) on an end side (88) of the electromagnet (44).

10. Locking apparatus (30) according to one of the preceding claims, **characterized in that** the electromagnet (44) is arranged in a coil former (46), on which axial guide elements (78), in particular journals (78), are integrally formed for the axial guidance and/or for the rotational securing of the second locking element (34), which axial guide elements (78) engage into corresponding mating elements (80) of the second locking element (34).

11. Locking apparatus (30) according to one of the preceding claims, **characterized in that** at least one of the two locking elements (32, 34), in particular the second locking element (34), is produced at least partially from plastic, for example an elastomer.

12. Method for producing a gearbox/drive unit (10) having a locking apparatus (30) according to one of the preceding claims, **characterized in that** the locking apparatus (30) is fastened first of all in the housing (16) of the gearbox/drive unit (10), and subsequently the shaft (14) is introduced, in particular with the driver (66), with a play-affected positively locking connection into a central cut-out (64) of the first locking element (32).

13. Method according to Claim 12, **characterized in that** the locking apparatus (30) is installed with the lock housing (52) into the housing (16) of the gearbox/drive unit (10) in a rotationally fixed manner and is secured axially, in particular, by means of material deformation.

14. Method according to Claim 12 or 13, **characterized in that**, before the installation into the housing (16) and before the mounting of the shaft (14), the locking apparatus (30) has its function, in particular its power consumption, tested as a separate unit (31) which is enclosed by the lock housing (52).

## Revendications

1. Dispositif de verrouillage (30) pour bloquer un mouvement de rotation d'un arbre (14) par rapport à un boîtier (16) d'une unité d'entraînement à engrenage (10), comprenant un premier élément de verrouillage (32) et un deuxième élément de verrouillage (34) qui est déplaçable par rapport au premier élément de verrouillage (32) au moyen d'au moins un électroaimant (44) et d'au moins un élément de rappel (42), le dispositif de verrouillage (30) étant réalisé sous forme d'unité structurelle autonome (31) qui peut être montée sous forme d'unité (31) d'une part sur le boîtier (16) et d'autre part sur l'arbre (14), les deux éléments de verrouillage (32, 34) étant disposés avec l'électroaimant (44) et l'élément de rappel (42) à l'intérieur d'un boîtier de verrouillage (52),
**caractérisé en ce que** le boîtier de verrouillage (52) présente au moins une butée axiale (60, 74) sur laquelle s'appuie axialement le premier élément de verrouillage rotatif (32), afin que les deux éléments de verrouillage (32, 34) disposés dans le boîtier de verrouillage (52) ne soient pas axialement en contact dans l'état de rotation, le premier élément de verrouillage rotatif (32) présentant des saillies axiales (62, 61) qui s'appuient contre l'au moins une butée axiale (60, 74) du boîtier de verrouillage (52) et les éléments de verrouillage (32, 34) venant en prise par engagement par correspondance géométrique dans l'état de verrouillage dans la direction axiale.

2. Dispositif de verrouillage (30) selon la revendication 1, **caractérisé en ce que** les deux éléments de verrouillage (32, 34) présentent à chaque fois des renfoncements (82) s'étendant radialement et des rehaussements (84) s'étendant radialement, qui peuvent venir en prise les uns dans les autres par engagement par correspondance géométrique, afin de bloquer le mouvement de rotation de l'arbre (14).

3. Dispositif de verrouillage (30) selon l'une quelconque des revendications 1 ou 2, **caractérisé en ce que** le boîtier de verrouillage (52) est réalisé sous forme pratiquement fermée, et peut être inséré dans le boîtier (16) de l'unité d'entraînement à engrenage (10).

4. Dispositif de verrouillage (30) selon l'une quelconque des revendications précédentes, **caractérisé en ce que** le premier élément de verrouillage (32) est réalisé sous forme de disque rotatif avec des formations en saillie radiales (68) - par exemple une denture interne (68) - qui peuvent être engagées dans des formations en saillie conjuguées correspondantes (70) - par exemple une denture externe (70) - d'un dispositif d'entraînement (66) disposé de manière solidaire en rotation sur l'arbre (14), lequel dispositif d'entraînement est enfoncé dans l'élément de verrouillage (32) après le montage de ce dernier.

5. Dispositif de verrouillage (30) selon l'une quelconque des revendications précédentes, **caractérisé en ce que** l'électroaimant (44) n'est pas alimenté en courant dans l'état de verrouillage, et le deuxième élément de verrouillage (34) est pressé par l'au moins un élément de rappel (42) par engagement par correspondance géométrique dans le premier élément de verrouillage (32), et dans l'état de rotation l'électroaimant (44) est alimenté en courant, afin de libérer le deuxième élément de verrouillage (34) axialement hors du premier élément de verrouillage (32).

6. Dispositif de verrouillage (30) selon l'une quelconque des revendications précédentes, **caractérisé en ce que** l'au moins une butée axiale (74) est réalisée par la paroi extérieure d'un disque de butée (60).

7. Dispositif de verrouillage (30) selon l'une quelconque des revendications précédentes, **caractérisé en ce que** pour le support axial par rapport à la paroi intérieure du disque de butée (60), l'élément de verrouillage (32) présente, en tant que saillies axiales (supplémentaires) (62), une nervure périphérique (63), qui s'appuie contre une butée fixée en rotation, qui est formée par la paroi intérieure du disque de butée (60).

8. Dispositif de verrouillage (30) selon l'une quelconque des revendications précédentes, **caractérisé en ce que** les saillies (62, 61, 63) forment un crochet d'encliquetage (61) ou un goujon avec une bague de serrage ou de fixation, ou, après leur passage à travers le disque de butée (60) sont déformées radialement et s'appuient notamment au moyen d'une déformation de matériau contre le côté extérieur du disque de butée (60).

9. Dispositif de verrouillage (30) selon l'une quelconque des revendications précédentes, **caractérisé en ce que** des éléments de ressort (89) sont disposés sur un côté frontal (88) de l'électroaimant (44) en tant que contact électrique (56), les éléments de ressort s'étendant dans la direction axiale.

10. Dispositif de verrouillage (30) selon l'une quelconque des revendications précédentes, **caractérisé en ce que** l'électroaimant (44) est disposé dans un support de bobine (46) sur lequel sont façonnés, pour le guidage axial et/ou pour la fixation en rotation du deuxième élément de verrouillage (34), des éléments de guidage axiaux (78) - en particulier des tourillons (78) - qui viennent en prise dans des éléments conjugués correspondants (80) du deuxième élément de verrouillage (34).

11. Dispositif de verrouillage (30) selon l'une quelconque des revendications précédentes, **caractérisé en ce qu'**au moins l'un des deux éléments de verrouillage (32, 34) - en particulier le deuxième élément de verrouillage (34) - est fabriqué au moins en partie en plastique, par exemple en un élastomère.

12. Procédé de fabrication d'une unité d'entraînement à engrenage (10) avec un dispositif de verrouillage (30) selon l'une quelconque des revendications précédentes, **caractérisé en ce que** le dispositif de verrouillage (30) est fixé d'abord dans le boîtier (16) de l'unité d'entraînement à engrenage (10), et ensuite l'arbre (14) - en particulier avec le dispositif d'entraînement (66) - est introduit par engagement par correspondance géométrique avec jeu dans un évidement central (64) du premier élément de verrouillage (32).

13. Procédé selon la revendication 12, **caractérisé en ce que** le dispositif de verrouillage (30) est incorporé de manière solidaire en rotation avec le boîtier de verrouillage (52) dans le boîtier (16) de l'unité d'entraînement à engrenage (10) et est fixé axialement en particulier au moyen d'une déformation de matériau.

14. Procédé selon la revendication 12 ou 13, **caractérisé en ce que** le dispositif de verrouillage (30), avant l'incorporation dans le boîtier (16) et avant le montage de l'arbre (14) en tant qu'unité séparée (31) entourée par le boîtier de verrouillage (52) est contrôlé en termes de son fonctionnement, notamment de sa puissance absorbée.
